# EUROPÄISCHE PATENTSCHRIFT

(11) **EP 1 277 067 B1**
(45) Veröffentlichungstag und Bekanntmachung des Hinweises auf die Patenterteilung: **26.12.2007**
(21) Anmeldenummer: 01915591.0
(22) Anmeldetag: 21.03.2001
(51) Int. Cl.: G01S 17/89

(54) **VERFAHREN ZUR AUFNAHME EINES OBJEKTRAUMES**
METHOD FOR THE RECORDING OF AN OBJECT SPACE
PROCEDE DE PRISE DE VUES D'UN ESPACE OBJET

(30) Priorität: 07.04.2000 AT 5932000
(43) Veröffentlichungstag der Anmeldung: 22.01.2003
(73) Patentinhaber: Riegl Laser Measurement Systems Gmbh, 3580 Horn (AT)
(72) Erfinder: RIEGL, Johannes, A-3754 Trabenreith (AT); ULLRICH, Andreas, AT-3003 Gablitz (AT); ZIERLINGER, Wolfgang, A-3495 Rohrendorf (AT)
(74) Vertreter: Révy von Belvárd, Peter
(86) Internationale Anmeldenummer: PCT/IB2001/000424
(87) Internationale Veröffentlichungsnummer: WO 2001/077709

(56) Entgegenhaltungen:
- WO-A-99/13355
- DE-A- 3 408 082
- US-A- 5 125 745
- US-A- 5 212 738

## Beschreibung

### Gebiet der Erfindung

Die Erfindung betrifft ein Verfahren zur Aufnahme eines Objektraumes mit einem opto-elektronischen Entfernungsmesser nach einem Signal-Laufzeitverfahren mit einer Sendeeinrichtung zum Aussenden von optischen Signalen, insbesondere denen eines Lasers, und einer Empfangseinrichtung zum Empfangen von optischen Signalen, insbesondere von Laserstrahlung, die von im Zielraum befindlichen Objekten reflektiert wird. Der Entfernungsmesser ist mit einer Scan-Einrichtung zur Ablenkung der optischen Achsen von Sende- und Empfangseinrichtung kombiniert, und verfügt über eine Auswerteeinrichtung, die aus der Laufzeit bzw. der Phasenlage des ausgesandten optischen Signals Entfernungswerte ermittelt. Nach der Scan-Einrichtung, d. h. aus dem Bereich der dem Entfernungsmesser zugewendet ist, wird aus dem Strahlengang von Sende- und/oder Empfangseinrichtung ein Teil des Strahlenbündels abgespalten und Empfangsdioden od. dgl. zugeleitet, wobei aus den entsprechenden Signalen ein Bildelement ermittelt wird und jedem Bildelement ein Entfernungswert und Raumwinkel zugeordnet ist.

### Hintergrund der Erfindung

Entfernungsmesser-Scanner liefern sogenannte Entfernungsbilder, d. h. Bilder, deren Bildelemente, in Grauwertstufen oder Falschfarben codiert, Entfernungswerte angeben. Diese Technologie hat in vielen Bereichen der Technik, der Architektur, des Bauwesens etc. Eingang gefunden. Ein Vorteil dieser Systeme gegenüber konventionellen Entfernungsmessgeräten ist, dass in kürzester Zeit eine so grosse Zahl von Punkten im Objektraum vermessen und dokumentiert werden, dass aus diesen Daten dreidimensionale Strukturen rekonstruiert werden können. Zum einen können ausgehend von einem solchen Entfernungsbild beliebige andere Ansichten der 3-D Struktur erzeugt werden, andererseits können diese Daten mittels CAD-(Computer Aided Design)-Programmen weiter bearbeitet werden.

Aus der US 5,125,745 ist ein Verfahren zur Aufnahme eines Objektraumes mit einem Entfernungsmesser gemäss dem Oberbegriff des Anspruchs 1 bekannt.

Eine besondere Anwendung haben solche Systeme in der Stahlindustrie gefunden: Converter, Pfannen od. dgl., in welchen Stahlschmelzen behandelt werden, sind einem relativ hohen Verschleiss ausgesetzt. Diese Converter od. dgl. verfügen über einen Mantel aus Stahl, der eine Innenauskleidung aus Feuerfest-Steinen aufweist. In der Regel besteht diese Ausmauerung aus zumindest zwei Schichten, eine innere, der Schmelze zugekehrte Verschleissschichte und eine Sicherheitsausmauerung direkt am Stahlmantel. Eine wesentliche Aufgabe dieser Ausmauerung ist, den Stahlmantel vor einer zu hohen thermischen Belastung zu schützen. Ein auch nur lokaler Defekt in der Ausmauerung könnte zu katastrophalen Schäden an der Anlage führen und muss daher mit Sicherheit vermieden werden. Andererseits ist eine Reparatur oder Erneuerung der Ausmauerung ein ausserordentlich aufwendiger Prozess und bedingt eine lang andauernde Betriebsunterbrechung.

Um einerseits maximale Betriebssicherheit zu erzielen und andererseits einen möglichst ökonomischen Betrieb der Anlage zu gewährleisten, werden die Converter od. dgl. inspiziert. Hierzu wird unmittelbar nach der Entleerung des Converters der BehälterInnenraum mit einem Entfernungsmesser vermessen. Wegen der kurzen Messzeit und des dichten Netzes von Messpunkten haben sich für diese Aufgabe Laserentfernungsmesser-Scanner besonders bewährt. Typischer Weise wird nach der Herstellung der Ausmauerung des Converters der Innenraum vermessen, wobei am Converter selbst einige Bezugspunkte aufgenommen werden, die es ermöglichen, den Innenraum in Bezug auf ein fixes Koordinatensystem darzustellen. Bei einer Inspektion während des Betriebes der Anlage wird wieder eine Vermessung des Innenraumes durchgeführt. Die Koordinatensysteme beider Aufnahmen werden zur Deckung gebracht und die Entfernungsbilder voneinander subtrahiert. Das resultierende Entfernungsbild zeigt dann die Abweichungen vom Ausgangszustand der Ausmauerung. Ausgebrochene Steine oder extremer Verschleiss der Ausmauerung werden damit sichtbar.

### Kurzfassung der Erfindung

Wie oben ausgeführt worden ist, ist zufolge der langen Betriebsunterbrechung und des entsprechenden Produktionsausfalles die Entscheidung, einen Converter zu überholen, betriebswirtschaftlich sehr bedeutsam. Um die Sicherheit dieser Entscheidung zu verbessern, wird nun vorgeschlagen, die Messung durch Einsatz eines zweiten, unabhängigen Messverfahrens weiter abzusichern. Hierzu wird erfindungsgemäss die Empfangseinrichtung mit in einem oder mehreren definierten Spektralbereichen, vorzugsweise im Infra-Rot, sensitive Sensoren, vorzugsweise Dioden, ausgerüstet, wobei aus den Signalen dieser Sensoren ein Temperaturwert errechnet und parallel zum Entfernungsbild ein deckungsgleiches Wärmebild erzeugt wird.

Vorteilhaft werden bei Einsatz zur Vermessung von heissen Objekten, d.h. von Objekten mit einer Temperatur von mindestens 600 °C, vorzugsweise von mindestens 1000 °C, Sensoren für die Grundfarben des sichtbaren Lichtes (RGB-Dioden) eingesetzt.

In einer vorteilhaften Weiterbildung der Erfindung können alternativ oder zusätzlich zu den Sensoren zur Generierung eines Bildelementes spezielle Infra-Rot-Sensoren, z.B. InGaAs- und Si-Dioden, eingesetzt werden, die in verschiedenen IR-Spektralbereichen sensibilisiert sind.

Bei Messverfahren der oben angegebenen Art, bei welchem die Empfindlichkeit der Empfangseinrichtung des Entfernungsmessers bei Hochtemperaturanwendungen entsprechend der Hintergrundhelligkeit zur Vermeidung von Übersteuerungen durch das Hintergrundrauschen reduziert wird, wird gemäss einem weiteren Merkmal der Erfindung für jedes Bildelement ein Temperaturwert ermittelt und aus diesem ein für jeden, dem jeweiligen Bildelement zugehörigen Entfernungswert ein individueller Korrekturwert für diesen errechnet, so dass die sich durch die Reduktion der Empfindlichkeit ergebenden Messfehler für jedes Bildelement individuell kompensierbar sind.

### Kurzbeschreibung der Zeichnung

Weitere Merkmale der Erfindung ergeben sich aus der nachfolgenden Beschreibung bevorzugter, in der Zeichnung schematisch dargestellter Ausführungsbeispiele, in der
- Fig. 1: einen Laserentfernungs-Scanner in Messposition vor der Öffnung eines Stahl-Converters zeigt;
- Fig. 2: diese Einrichtung mit dem Converter im Axialschnitt veranschaulicht;
- Fig. 3: schematisch den Messkopf des Scanners darstellt; die
- Fig. 4 und 5: die Innenwand des Converters (in Fig. 4 in Form einer Abwicklung) mit den Messergebnissen veranschaulichen; und
- Fig. 6: ein Blockdiagramm der Anlage ist.

### Detaillierte Beschreibung der Zeichnung

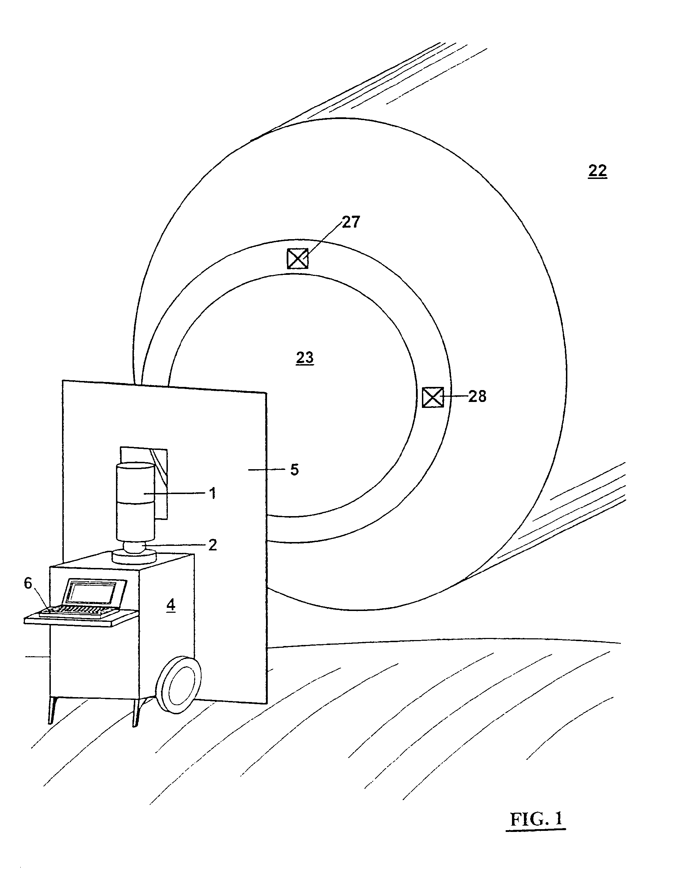

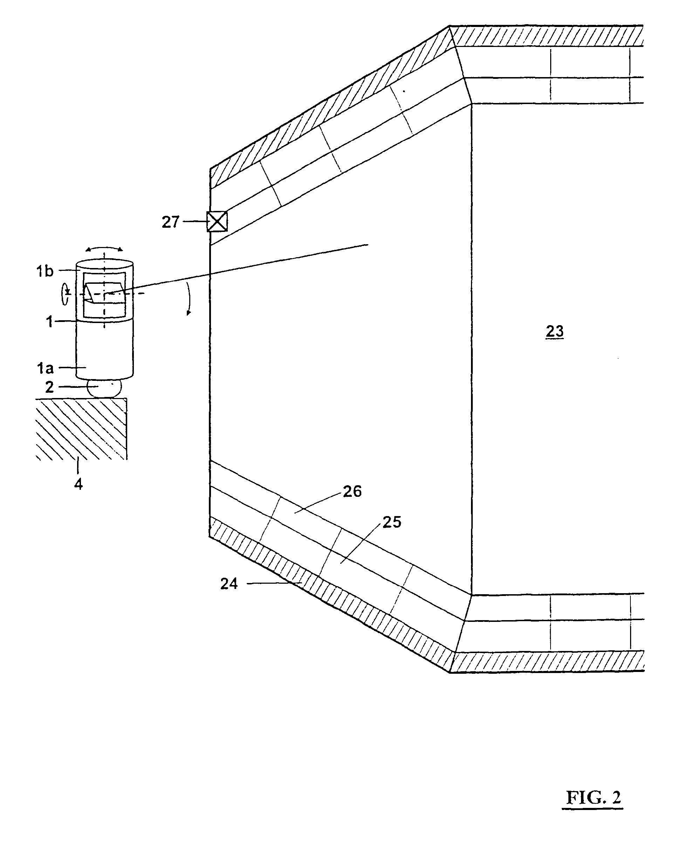

In den Fig. 1 und 2 wird ein Scanner gezeigt, der über einen Laser-Entfernungsmesser und eine damit kombinierte Bildaufzeichnungseinheit verfügt. Das Gerät ist auf einem Wagen 4 montiert, auf welchem ein Messkopf 1 befestigt ist. Mit einem Kugelkopf 2 kann der Messkopf 1 grob in Bezug auf den Converter 22 ausgerichtet werden. Die Anlage und die diese bedienende Person werden durch ein Schutzschild 5 gesichert, insbesondere gegen die extreme Strahlung aus dem Converterinnenraum. Mit 6 ist ein Computer bezeichnet, über den die Anlage gesteuert wird und der zur Auswertung und Speicherung der Ergebnisse dient. Am Bildschirm des Computers können die Ergebnisse praktisch in Echtzeit überprüft werden.

In Fig. 2 ist das System in zusätzlichen Details dargestellt. Der Messkopf 1 besteht aus einem Unterteil 1 a, der starr mit dem Kugelkopf 2 verbunden ist. Am Messkopfunterteil 1a ist um eine vertikale Achse schwenkbar ein Messkopfoberteil 1b gelagert. Dieser enthalt ein um eine horizontale Achse rotierendes Spiegelprisma, das von einem Motor mit hoher Geschwindigkeit angetrieben wird. Durch dieses Prisma wird sowohl der Messstrahl als auch der Aufnahmestrahl der Bildaufzeichnung abgelenkt, wodurch der Innenraum des Converters 23 in Form von vertikal verlaufenden Zeilen abgetastet wird. Zur Abtastung des Converters in horizontaler Richtung wird der Messkopfoberteil 1b gegenuber dem Unterteil 1 a motorisch hin- und her-bewegt. Die Fig. 2 zeigt darüber hinaus den Stahlmantel 24 des Converters und die Sicherheitsausmauerung 25 an der nach innen die Verschleissausmauerung 26 anschliesst. Die beiden Ausmauerungen bestehen aus Feuerfest-Material und schützen den Stahlmantel des Converters. Am Convertermantel befestigt bzw. in die Ausmauerung im Bereich des Convertermaules eingelassen sind mindestens drei Bezugsmarken 27 und 28, die ein Koordinatensystem für die Converter-Innen-Wand definieren. Durch Einführung eines solchen Converter-Koordinaten-Systems wird die Ausrichtung der Messanlage wesentlich vereinfacht: Es genügt den Messwagen vor dem Converter nach Markierungen am Boden aufzustellen und gegebenenfalls den Messkopf vertikal auszurichten. Da beim Scannen die Bezugsmarken mit aufgezeichnet werden. können bei der Auswertung der Bilder diese gegenüber einem früher aufgenommenen Bild manuell oder auch automatisch ausgerichtet und anschliessend zur Deckung gebracht werden.

Mit Hilfe des neuen Verfahrens ist es möglich, gleichzeitig mit einem Entfernungsbild ein deckungsgleiches Wärmebild aufzunehmen. Die Entfernungsbilder werden im allgemeinen mit Entfernungsbildern verglichen, die entweder nach der Ausmauerung oder anlässlich der letzten Inspektion des Converters aufgenommen worden sind. Durch Subtraktion der beiden Bilder entsteht ein Differenzbild. Zur Erleichterung der Interpretation solcher Bilder werden diese in Falschfarben-Codierung oder in Höhenschichtenlinien ausgegeben.

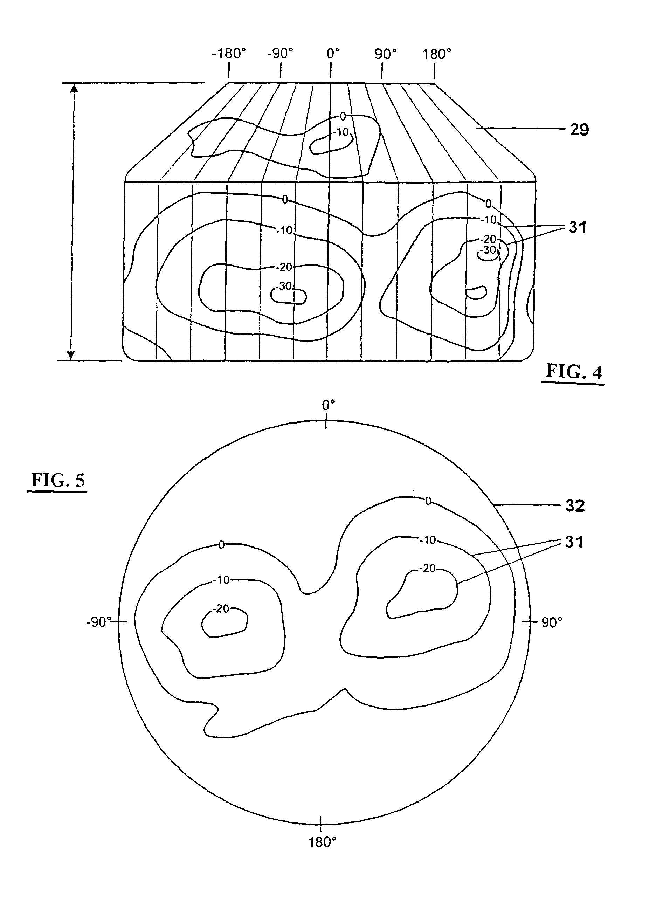

Die Fig. 4 und 5 zeigen solche Bildschirmbilder bzw. Ausdrucke für eine Abwicklung des inneren Mantels 29, des Converters 22 und des Bodens 32. Mit 31 sind Höhenschichtenlinien bezeichnet. Die Entfernungsbilder werden in analoger Weise dargestellt. Da diese völlig deckungsgleich mit den Entfernungsbildern sind, können sie nicht nur alternativ ausgegeben werden, sondern auch einander überlagert werden. Stellen in der Ausmauerung mit hohem Verschleiss oder mit Ausbrüchen von Feuerfest-Steinen zeichnen sich sowohl im Entfernungsbild als eine entsprechende Änderung gegenüber einem früheren Zustand ab, sind aber auch im Wärmebild deutlich sichtbar. Durch die Reduktion der thermischen Isolierung ergibt sich in solchen Bereichen ein erhöhter Wärmefluss von der Converter-Innenwand zum Stahlmantel 24, so dass Stellen mit hohem Verschleiss oder Ausbrüchen im Wärmebild deutlich kälter erscheinen. Da die beiden Ausgaben nach völlig unterschiedlichen Messverfahren entstanden sind, ist eine Übereinstimmung der Ergebnisse eine wichtige Bestätigung der Resultate.

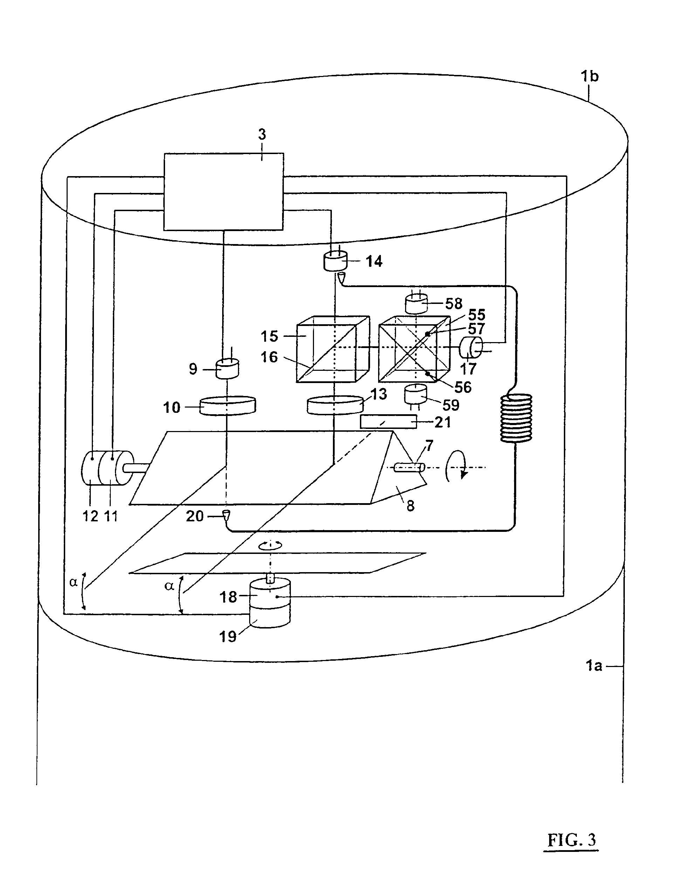

Die Fig. 3 zeigt die Scan-Einheit des Messkopfes 1 in zusätzlichen Einzelheiten. Von dem Steuergerät 3 wird eine Laser-Diode 9 gespeist, deren Strahlung durch eine Optik 10 ins Unendliche abgebildet wird. Das im wesentliche parallel ausgerichtete Strahlenbündel wird durch das 3-seitige, verspiegelte Prisma 8 abgelenkt, welches um eine Achse 7 rotiert und durch einen Motor 11 angetrieben wird. Durch einen mit dem Motor 11 verbundenen Winkeldecoder 12 wird ein Stellungssignal α an das Steuergerät 3 rückgemeldet. Durch die Drehung des Prismas 8 überstreicht das Laser-Strahlenbündel im Objektraum einen Winkel von ca. 80°. Die Laser-Strahlung wird von im Objektraum befindlichen Zielen reflektiert und von einer Optik 13 auf eine Empfangsdiode 14 konzentriert. Das entsprechende Empfangs-Strahlenbündel wird durch das gleiche Spiegelprisma 8 umgelenkt, so dass Sende- und Empfangsstrahlen im wesentlichen parallel ausgerichtet werden. Zwischen der Optik 13 und der Diode 14 ist ein Strahlenteilungsprisma 15 angeordnet. dessen teilverspiegelte Teilungsfläche 16 dichroitisch beschichtet ist, so dass Infra-Rot-Laserlicht diese Fläche praktisch ungeschwächt passieren kann, während sichtbares Licht und Infra-Rot Strahlung anderer Wellenlänge auf ein zweites Strahlenteilerprisma 55 reflektiert wird. Dieses Prisma hat zwei teilreflektierende Flächen 56 und 57, die ebenfalls dichroitisch beschichtet sind. Dieses Prisma spaltet das einfallende Licht beispielsweise in die 3 Grundfarben RGB oder in Infra-Rot verschiedener Wellenlängen. Die entsprechenden Sensoren sind mit 17, 58 und 59 bezeichnet. Mit einer solchen Einrichtung kann zusätzlich zu dem Entfernungsbild ein deckungsgleiches Farb-(bzw. ein Falschfarben-Wärme-)-Video-Bild erzeugt werden.

Wie bereits eingangs erwähnt, wird durch das rotierende Spiegelprisma 8 der Objektraum in Form von vertikalen Zeilen abgetastet. Die oben beschriebenen Einrichtungen sind im Messkopf-Oberteil 1 b angeordnet. Dieser Oberteil wird durch einen Motor 18 in eine um eine vertikale Achse oszillierende Bewegung versetzt. Ein mit dem Motor 18 verbundener Winkeldecoder 19 liefert an das Steuergerät 3 ein dem Ablenkwinkel ϕ entsprechendes Rückmeldesignal.

Bei einer ganzen Umdrehung des Spiegelprismas 8 tasten die Strahlen den Objektraum in Form von drei Zeilen ab. Aus geometrischen Gründen kann in der gewählten Auslegung von den pro Zeile zur Verfügung stehenden 120 ° nur ein Winkel von 40 ° für die Entfernungsmessung und die Bildaufzeichnung genutzt werden. In der in Analogie zur Fernsehtechnik bezeichneten "Abtastlücke" wird der Laserstrahl durch das Prisma 8 auf einen Lichtleiter 20 gelenkt. Der eine definierte Länge aufweisende Lichtleiter leitet den von der Sendediode 9 ausgehende Laserimpuls der Empfangsdiode 14 zu. In einer bestimmten Winkelstellung des Prismas 8 trifft das Laserstrahlenbündel auf den Lichtleiter 20. Das Steuergerät 3 schaltet daher bei einem definierten α-Wert den Signalprozessor auf einen Kalibrierungsmodus, in welchem der von der Entfernungsmesseinheit ermittelte Wert mit dem tatsächlichen, durch die Länge des Lichtleiters 20 definierte Entfernung verglichen wird. Bei Abweichungen wird ein Korrekturwert berechnet, der bei der Berechnung der Entfernung von Zielen im Objektraum aus der Laufzeit der Laserimpulse entsprechend berücksichtigt wird.

In analoger Weise wird in der Abtastlücke des Prismas 8 eine Referenzfläche 21 auf die Dioden 17, 58 und 59 abgebildet. Bei Erreichen eines definierten α-Wertes wird der Video-Kanal auf einen Abgleichmodus geschaltet und je nach Ausbildung der Referenzfläche 21 ein Weiss- oder Schwarz-Abgleich durchgeführt. Der Video-Kanal kann natürlich auch auf einen definierten Grauwert abgeglichen werden.

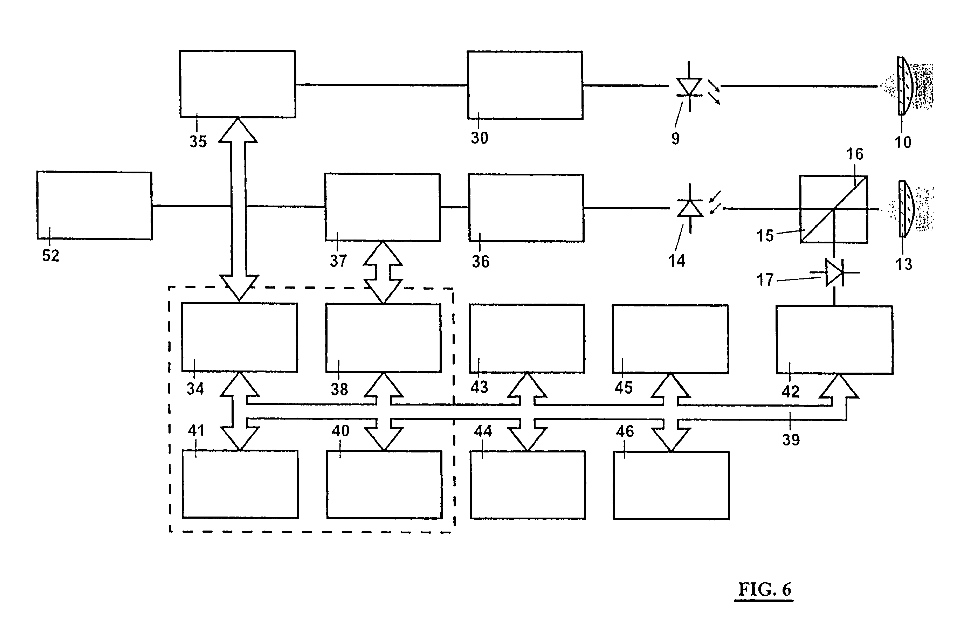

Fig. 6 zeigt in Form eines Blockdiagramms schematisch den Aufbau des Steuergerätes 3 des Laser-Scanners gemäss der Erfindung, wobei in diesem Diagramm nur die den Ablenkeinheiten nachgeschalteten Systeme dargestellt sind. Mit 30 ist ein Laser-Transmitter bezeichnet, der die Laserdiode 9 ansteuert, welcher die Optik 10 vorgeschaltet ist, die die Emitterzone des Lasers vorzugsweise ins Unendliche abbildet. Neben der Sendeoptik 10 ist eine Empfängeroptik 13 vorgesehen, deren optische Achse parallel zu der der Sendeoptik 10 ausgerichtet ist. Im Strahlengang der Empfängeroptik 13 ist ein Strahlenteilungsprisma 15 vorgesehen. Die Empfängeroptik 13 konzentriert einerseits die von einem im Strahlengang der Sendeoptik befindlichem Ziel im allgemeinen diffus reflektierte Strahlung auf die Empfangsdiode 14. Mit Vorteil wird als Empfangsdiode 14 eine Avalanche-Diode eingesetzt. Vorzugsweise sind Sende- und Empfangsdioden in ihrer spektralen Charakteristik aufeinander abgestimmt, wobei die Empfangsdiode ihre maximale spektrale Empfindlichkeit in demjenigen Bereich aufweist, in welchem die Sendediode maximal emittiert. Da die Empfangsdiode 14 aber neben der von der Sendediode emittierten und vom Ziel reflektierten Strahlung viel Störstrahlung in Form von Tageslicht oder Licht von den verschiedensten Kunstlichtquellen empfängt, kann es vorteilhaft sein, der Empfangsdiode ein möglichst schmalbandiges, optisches Filter vorzusetzen, welches seine maximale Transmission in dem Spektralband aufweist, in welchem der Laser emittiert.

Durch das Strahlenteilerprisma 15 wird ein Teil des aus dem Objektraumes abgestrahlten Lichtes auf eine Empfangsdiode 17 (und auf die weiteren, in dieser Figur nicht dargestellten Dioden 58 und 59) konzentriert. Mit einer solchen Einrichtung kann daher parallel zum Entfernungsbild (aktiver Kanal) über den zweiten, passiven Kanal ein Farb- oder Falschfarben-Wärmebild-Bild des Objektfeldes aufgezeichnet werden.

Der Lasertransmitter 30 umfasst einen Impulsgenerator, der die Laserdiode 9 ansteuert. Der Lasertransmitter 30 gibt, wenn er vom Prozessor 34 entsprechend angesteuert wird, eine Folge von Laserimpulsen, sogenannte Bursts, ab. Ein solcher Burst kann je nach vom Prozessor gegebenen Befehl 1-50 Impulse umfassen. Mittels eines vom Prozessor 34 steuerbarem Verzögerungsgenerators 35 können die einzelnen Impulse eines Bursts in ihrer Phasenlage verändert werden, wobei die Phasenverschiebung periodisch erfolgt.

Die von der Diode 14 empfangenen Signale werden in einer Verstärker- und Analog-Signalprozessorstufe 36 verstärkt und bearbeitet. In einer möglichen Ausbildungsform werden die auf diese Weise bearbeiteten Signale in einem Analog-/Digital-Konverter 37 mit einer Sample-Frequenz, von beispielsweise 60 MHz, digitalisiert. Diese gesampelten Echo-Signale werden in einem Speicher 38 abgelegt. Zufolge der Phasenverschiebung der Sendeimpulse eines Bursts gegenüber der Samplefrequenz werden die gesampelten Echosignale in verschiedene Speicherzellen abgelegt. Weist die Phasenverschiebung, wie oben ausgeführt, eine Periodizität von 5 Impulsen auf, so wird der gesampelte Puls nach 5 Impulsen auf den vorhergehenden aufaddiert. Umfasst ein Burst z B. 50 Impulse und werden die digitalisierten Impulse mit der Periode 5 "verkämmt", so werden jeweils in einer Speicherzelle 10 Digitalwerte aufaddiert und die Sample-Frequenz von 60 MHz erscheint um die Periodenzahl der Verkämmung vergrössert, in dem vorliegenden Beispiel auf 300 MHz, so dass das Abtasttheorem in Bezug auf den rekonstruierten Empfangsimpuls eingehalten werden kann.

In einer alternativen Ausführungsform wird mittels einer Zeitintervall-Digitalisierungseinrichtung 37 das Laufzeitintervall zwischen Sende- und Empfangsimpuls digitalisiert und die Ergebnisse in einem Speicher 38 abgelegt.

Getaktet wird die gesamte Einrichtung durch einen Clock-Generator 52. Der Prozessor 34 und der Datenspeicher 38 sind durch einen Datenbus miteinander verbunden, der schematisch angedeutet und mit 39 bezeichnet ist. An diesen Datenbus 39 sind ferner ein Programmspeicher 40 für den Prozessor 34 angeschlossen, sowie ein Datenzwischenspeicher 41, in welchen nach einer ersten Auswertung durch den Prozessor 34 Rohdaten abgelegt werden, die am Ende des Messzyklus ausgelesen werden. Aus diesen Rohdaten wird mit im Programmspeicher abgelegten Algorithmen ein Entfernungswert für jedes einzelne Rasterelement ermittelt.

Das von dem Dioden-Tripel 17, 58 und 59 gelieferte Signal wird in der Video-Prozessorstufe 42 verstärkt und weiter bearbeitet. Dieser Videoprozessor ist über den Bus 39 mit dem Prozessor 34 und den anderen Blöcken des Systems, insbesondere mit dem digitalen Bildspeicher 43 und dem Video-Interface 44, in Verbindung. Die zu den einzelnen Rasterelementen gehörigen Bildkoordinaten werden von den beiden Ablenkelektronik-Einheiten 45 und 46 über den Datenbus 39 in das System eingespeist.

Der Prozessor 34 ermittelt aus den Empfangssignalen die Amplitudenwerte, das Signalrauschverhältnis etc. und legt auf Grund dieser Werte die Zahl der Impulse pro Burst fest und steuert den Laser-Transmitter 30 entsprechend an. Gleichzeitig wird über den Datenbus 39 ein entsprechender Befehl an die Ablenkelektroniken 45 und 46 gesandt. Bei ungünstigen Bedingungen (niedere Amplitude der Empfangsimpulse, geringes Signal-/Rauschverhältnis, grosse Messwertstreuung) wird die Zahl der Impulse pro Burst erhöht und die Ablenkgeschwindigkeit der Scan-Einrichtung entsprechend reduziert. Diese Anpassung kann individuell für jedes einzelne Rasterelement, für eine Zeile von Rasterelementen oder für den ganzen Scan-Zyklus erfolgen.

## Patentansprüche

1. Verfahren zur Aufnahme eines Objektraumes mit einem opto-elektronischen Entfernungsmesser nach einem Signal-Laufzeitverfahren mit einer Sendeeinrichtung zum Aussenden von optischen Signalen, insbesondere denen eines Lasers, und einer Empfangseinrichtung zum Empfangen von optischen Signalen, insbesondere von Laserstrahlung, die von im Zielraum befindlichen Objekten reflektiert wird, ferner mit einer Scan-Einrichtung zur Ablenkung der optischen Achsen von Sende- und Empfangseinrichtung, ferner mit einer Auswerteeinrichtung, die aus der Laufzeit bezichungsweise. der Phasenlage des ausgesandten optischen Signals Entfernungswerte ermittelt und nach der Scan-Einrichtung aus dem Strahlengang von Sende- und/oder Empfangseinrichtung ein Teil des Strahlenbündels abgespalten und Empfangsdioden (14) oder dergleichen zugeleitet und aus den entsprechenden Signalen ein Bildelement ermittelt wird, wobei jedem Bildelement ein Entfernungswert und Raumwinkel zugeordnet ist, **dadurch gekennzeichnet, dass** die Empfangseinrichtung in einem oder mehreren definierten Spektralbereichen, vorzugsweise im Infra-Rot, sensitive Sensoren 17, 58, 59), vorzugsweise Dioden, umfasst, und dass aus den Signalen dieser Sensoren ein Temperaturwert errechnet und parallel zum Entfernungsbild ein deckungsgleiches Wärmebild erzeugt wird.

2. Verfahren Anspruch 1, **dadurch gekennzeichnet, dass** bei Einsatz zur Vermessung von heissen Objekten, d.h. von Objekten mit einer Temperatur von ca. 600 °C und höher. Sensoren für die Grundfarben des sichtbaren Lichtes (RGB-Dioden) eingesetzt werden.

3. Verfahren Anspruch 1 oder 2, **dadurch gekennzeichnet, dass** - alternativ oder zusätzlich zu den Sensoren zur Generierung eines Bildelementes - derart spezielle Infra-Rot-Sensoren, z.B. InGaAs- und Si-Dioden, eingesetzt werden, die in verschiedenen IR-Spektralbereichen sensibilisiert sind.

4. Verfahren einem der vorhergehenden Ansprüche, bei welchem die Empfindlichkeit der Empfangseinrichtung des Entfernungsmessers bei Hochtemperaturanwendungen entsprechend der Hintergrundhelligkeit zur Vermeidung von Übersteuerungen durch das Hintergrundrauschen reduziert wird. **dadurch gekennzeichnet. dass** für jedes Bildelement ein Temperaturwert ermittelt und aus diesem ein für jeden, dem jeweiligen Bildelement zugehörigen Entfernungswert ein individueller Korrekturwert für diesen errechnet wird, so dass die sich durch die Reduktion der Empfindlichkeit ergebenden Messfehler für jedes Bildelement individuell kompensierbar sind.

## Claims

1. A method for recording an object space comprising an opto-electronic range finder in accordance with a signal time-of-flight method and including transmitter means for transmitting optical signals, particularly those of a laser, and receiver means for receiving optical signals, particularly laser radiation, reflected by objects existing in the target space, further comprising a scanning device for deviating the optical axes of the transmitter and receiver means, and further comprising evaluation means which determine distance values from either the time-of-flight or the phase relationship of the emitted optical signals, wherein a part of the radiation beam is split off from the path of rays of the transmitting means and/or of the receiver means after said scanning device, and is fed to receiver diodes (14) or the like, an image element being determined from the corresponding signals, wherein a distance value and a space angle are assigned to each image element, **characterised in that** the receiver means comprise sensors (17, 58, 59), preferably diodes, sensitive for one or more defined spectral ranges, preferably for infrared, and that a temperature value is calculated from the signals of these sensors, and a congruent heat image is produced in parallel to the distance image.

2. Method according to claim 1, **characterised in that** sensors for the primary colours of the visible light (RGB diodes) are employed for the use for measuring hot objects, i.e. objects having a temperature of about 600°C or more.

3. Method according to claim 1 or 2, **characterised in that**, alternatively or in addition to the sensors for generating an image element, special infrared sensors, e.g. InGaAs diodes and Si diodes, are employed of such a type, which are sensitive in different IR spectral ranges.

4. Method according to any of the preceding claims, wherein the sensitivity of the receiver means of the range finder, in the case of a high-temperature application, is reduced in accordance with the background luminosity for avoiding over-amplifying by background noise, **characterised in that** a temperature value is determined for each image element, and an individual correction value is calculated from it for each distance value associated to the respective image element so that errors of measurement resulting from the reduction of sensitivity may be compensated individually for each image element.

## Revendications

1. Procédé de prise de vues d'un espace objet, avec un télémètre optoélectronique selon une méthode de durée de parcours, comprenant des moyens transmetteurs pour émettre des signaux optiques, particulièrement ceux d'un laser, et des moyens récepteurs pour recevoir des signaux optiques, particulièrement d'un rayonnement de laser, réfléchis par des objets se trouvant à l'espace de visé, comprenant de plus des moyens de scanneur pour dévier les axes optiques des moyens transmetteurs et récepteurs, en outre avec un dispositif d'évaluation, qui détermine des valeurs d'éloignement à partir du temps de parcours ou de la position en phase du signal optique émis, et dans lequel une partie du faisceau de rayons est séparée du chemin des rayons des moyens transmetteurs et/ou récepteurs après les moyens de scanneur, et est fournie aux diodes récepteurs (14) ou pareil, et un élément d'image est déterminé à partir des signaux correspondants, un valeur d'éloignement et un angle d'espace étant associés à chaque élément d'image, **caractérisé en ce, que** les moyens récepteurs comprennent des capteurs (17, 58, 59), préférablement des diodes, sensibles dans un ou plusieurs domaine(s) spectral (spectraux) définis, de préférence dans le domaine infrarouge, et que l'on calcule un valeur de température à partir des signaux de ces capteurs, et on produit un image par rayonnement thermique congruent en parallèle à l'image d'éloignement.

2. Procédé selon la revendication 1, **caractérisé en ce, qu'**au cas de l'emploi pour mesurer des objets chauds, ça veut dire des objets d'une température d'environ 600°C et plus, on utilise des capteurs pour les couleurs primaires de la lumière visible (des diodes RGB).

3. Procédé selon la revendication 1 ou 2, **caractérisé en ce, que** l'on emploie, alternativement ou en addition aux capteurs pour engendrer un élément d'image, des capteurs d'infrarouge spéciaux, par exemple des diodes InGaAs et Si, de sorte, qu'ils soient sensibles dans des domaines spectraux infrarouges différents.

4. Procédé selon une quelconque des revendications précédentes, dans lequel, en cas d'une application à haute température, on réduit la sensibilité des moyens récepteurs du télémètre en correspondance avec la luminosité de l'arrière-plan pour éviter une surrégulation par le bruit de fond, **caractérisé en ce, que** l'on détermine un valeur de température pour chaque élément d'image, et à partir de ceci on calcule un valeur individuel de correction pour chaque valeur d'éloignement associé à l'élément d'image respectif, de manière que les erreurs de mesurage résultant par la réduction de la sensibilité peuvent être compensés individuellement pour chaque élément d'image.
